# EUROPEAN PATENT SPECIFICATION

(11) **EP 2 832 055 B1**
(45) Date of publication and mention of the grant of the patent: **31.08.2016**
(21) Application number: 13711245.4
(22) Date of filing: 11.03.2013
(51) Int. Cl.: H04L 12/721

(54) **PSEUDOWIRE GROUPS IN A PACKET SWITCHED NETWORK**
PSEUDOWIRE-GRUPPEN IN EINEM PAKETVERMITTELTEN NETZWERK
GROUPES DE PSEUDO-FILS DANS UN RÉSEAU À COMMUTATION DE PAQUETS

(30) Priority: 30.03.2012 US 201213435587
(43) Date of publication of application: 04.02.2015
(73) Proprietor: Alcatel Lucent, 92100 Boulogne-Billancourt (FR)
(72) Inventor: DUTTA, Pranjal, K., Mountain View, CA 94043 (US)
(74) Representative: Knecht, Ulrich Karl
(86) International application number: PCT/US2013/030181
(87) International publication number: WO 2013/148133

(56) References cited:
- MARTINI L ET AL: "Pseudowire Setup and Maintenance Using the Label Distribution Protocol (LDP); rfc4447.txt", 20060401, 1 April 2006 (2006-04-01), XP015046298, ISSN: 0000-0003

## Description

### Field of the Invention

The invention is directed to groups of pseudowires in a packet switched network (PSN), particularly to establishing and managing the groups and conveying information in connection with the groups to devices in the PSN.

### Background

Pseudowire (PW) is a mechanism that emulates the essential attributes of a telecommunications service (Frame Relay, Asynchronous Transfer Mode, Ethernet) over a Packet Switched Network (PSN). These Layer 2 services can be emulated over an MPLS backbone by encapsulating the layer 2 Protocol Data Units (PDU) and transmitting them with MPLS labels that identifies a PWs. Label Distribution Protocol (LDP) is used as the default protocol for Pseudowire Setup and Maintenance as per Internet Engineering Task Force (IETF) RFC 4447.

The terminology used herein includes PE for "Provider Edge Device" and CE for "Customer Edge Device". A PSN tunnel is established to provide a data path for the PW between two provider edge devices. PW traffic is not distinguishable to the core network, and the core network is transparent to the CEs. Native data units (bits, cells, or packets) arrive via the respective Attachment Circuit (AC) between each PE and its CE, are encapsulated in a PW PDU, and are carried across the underlying network via the PSN tunnel. The PEs perform the necessary encapsulation and decapsulation of PW PDUs and handle any other functions required by the PW service, such as sequencing or timing.

A Multi-Segment Pseudowire (MS-PW) is a set of two or more contiguous PW segments that behave and function as a single point-to-point PW. A MS-PW enables providers to extend the reach of PWs across multiple transport PSN domains. The terminology used herein includes S-PE for "Switching" PE Device where two segments of a MS-PW are stitched together. PW Labels are switched by S-PE between two PW segments.

RFC4447 describes a concept of PW grouping that represents an arbitrary group of PWs specific to a "Terminating" PE (T-PE) device. T-PE stands for the PE device where a PW terminates. When label mapping messages are exchanged between two PW emulation points, those messages carry a PW grouping TLV that identifies a PW group local to the sender T-PE. The T-PE at the other end (receiver of the label mapping) maintains a database of PWs that map to the PW group at sender T-PE.

The PW grouping allows "wildcard" messaging from the sender T-PE on the entire group when any event common to the group requires notifications to the other end T-PE - such as wildcard label withdrawals or wildcard status notification messages. A single message can be sent with the PW grouping identifier (ID) to notify action on all member PWs in a group. For example, a PW grouping ID can be used as a port index and can be assigned to all PWs that have ACs bound to that port. Use of PW grouping ID enables a PE to send one single wildcard label withdrawal message or PW status notification message specifying the group ID in the event of port failure. Such wildcard messaging provides significant reduction of per PW messaging overhead and makes the PW Operations Administration and Maintenance (OAM) Status notifications very efficient.

The existing method of PW grouping imposes the restriction that a PW can belong to only one group across the T-PEs. Further with MS-PW, it is not possible that a PW can belong to the same group across the T-PEs since the MS-PW traverses across one or more S-PEs and such PW grouping is meaningful across a single PW segment.

A set of PWs originating in a first T-PE can be bound to the same local port. It is not necessary that all member PWs are bound to the same PSN tunnel between the first T-PE and a first S-PE since the PSN requirements of the PWs may vary based on diverse Quality of Service (QoS) or diverse next-hop S-PEs requirements, etc. Two PWs of the group may share the same local port but may be routed to different S-PEs. This requires a PW to assign at least two groups at the sender T-PE:
1. An "access" group based on port id or other attributes on the attachment circuit (AC) for triggering a wildcard PW status message on various fault/status transitions associated with the AC.
2. A "network" group based on the PSN tunnel used to reach the first S-PE for triggering wildcard PW status message on various PSN fault/status transitions associated with the PSN tunnel.

The grouping association may also change at each S-PE along the MS-PW. For example, the first S-PE may receive a PW set-up request for both PWs, which have the same grouping ID "G", but may route each of the PWs to different S-PEs or the same S-PE but over different PSN tunnels based on diverse QoS/Policy requirements of each of the PWs. However in both cases, if the first S-PE detects a PSN tunnel fault towards another S-PE, it cannot use wildcard messaging to notify the fault to all PEs of the member PWs that are affected. Further, when an S-PE receives a wildcard message with group G, it cannot transparently forward the wildcard message to next-hop S-PE(s) since grouping ID is meaningful only for a single PW hop.

For efficiency and scalability of PW maintenance, it is required that wildcard messaging be possible from any T-PE or S-PE that can be seamlessly notified across all T-PE or S-PE devices through which the PWs that belong to the group traverse. Hereinafter this document at times may use PE to specify a T-PE or an S-PE. LDP is a Transmission Control Protocol (TCP) based protocol which is prone to signaling delays due to congestion control in TCP. In Dynamic MS-PW, a PW status message traverses through control planes of each of the S-PEs of the MS-PW since that is a requirement of PW OAM Message Mapping, according to IETF RFC6310. Efficiency and performance of PW status signaling is a very important factor for PW OAM Message Mapping, PW Redundancy, PW applications such as Virtual Private Local Area Network Service (VPLS) Media Access Control (MAC) Address Flush for example according to IETF RFC4762. When PW scaling requirements are high (e.g. 128,000 PWs) the resulting high volume of PW status signaling may impact the operational efficiency of LDP and SLA (Service Level Agreement) of the PW service,

Therefore, an efficient way of establishing and managing the PW groups and conveying information in connection with the groups to devices in the PSN is desired.

### Summary

The invention is defined by the independent claims 1,5 and 12.

Embodiments of the invention are directed to extended psuedowire groups in a packet switched network. Some embodiments associate a pseudowire to one or more groups at each provider edge device across which the pseudowire traverses. When a pseudowire set-up request message traverses across various provider edge devices, each provider edge device typically adds one or more local group membership information elements into the pseudowire set-up request message. In that way the grouping assigned by each provider edge device that the pseudowire traverses is made available to all other provider edge devices traversed by the pseudowire. Advantageously, this availability of pseudowire grouping information allows any of these provider edge devices (T-PE or any of the S-PEs) to initiate a wildcard message to notify other provider edge devices with respect to pseudowires in any of its local groups, as well as allowing a pseudowire to be bound to multiple groups based on various requirements. The invention describes this PW grouping as "Extended Groups".

According to an aspect of the invention a method of learning a pseudowire extended group is provided. The method comprises performing the following steps by a provider edge device: receiving a pseudowire setup request message that includes a pseudowire label and extended group information; extracting the extended group information and the pseudowire label from the pseudowire setup request message; adding the extracted extended group information to a database in the provider edge device; and adding the pseudowire label to a record in the database that includes the extracted extended group information.

According to another aspect of the invention a method of initiating a wildcard pseudowire status message is provided. The method comprises performing the following steps on a provider edge device: detecting a change in status of a resource associated with the provider edge device; determining if a pseudowire is affected by the change in status; determining, responsive to a pseudowire being affected by the change in status, a pseudowire group of the pseudowire; forming a wildcard pseudowire status message that includes an indication of the pseudowire group; and forwarding the wildcard pseudowire status message to a next hop of the provider edge device in a path of the pseudowire.

According to yet another aspect of the invention a method of responding to a wildcard pseudowire status message is provided. The method comprises performing the following steps on a provider edge device: receiving a wildcard pseudowire status message over a pseudowire; determining, from the pseudowire status message, an affected pseudowire group; determining an affected pseudowire of the affected pseudowire group; and taking an action with respect to the affected pseudowire.

According to a further aspect of the invention a device for implementing a pseudowire extended group is provided. The device comprises: a data port operable to receive and transmit pseudowire protocol data unit traffic; storage having memory that has been adapted by a program of instructions; and a processor in communication with the storage and the data port. Execution of the program by the processor causes the device to perform a function associated with a pseudowire extended group.

The function performed by the device may include: receiving a pseudowire setup request message that includes a pseudowire label and extended group information; extracting the extended group information and the pseudowire label from the pseudowire setup request message; adding the extracted extended group information to a database in the provider edge device; and adding the pseudowire label to a record in the database that includes the extracted extended group information.

Additionally or alternatively the function performed by the device may further include: detecting a change in status of a resource associated with the provider edge device; determining if a pseudowire is affected by the change in status; determining, responsive to a pseudowire being affected by the change in status, a pseudowire group of the pseudowire; forming a wildcard pseudowire status message that includes an indication of the pseudowire group; and forwarding the wildcard pseudowire status message to a next hop of the provider edge device in a path of the pseudowire.

Further additionally or alternatively the function performed by the device may further include: performing the following steps on a provider edge device: receiving a wildcard pseudowire status message over a pseudowire; determining, from the pseudowire status message, an affected pseudowire group; determining an affected pseudowire of the affected pseudowire group; and taking an action with respect to the affected pseudowire.

According to yet a further aspect of the invention a packet switched network is provided. The packet switched network comprises: a first device for implementing a pseudowire extended group, the first device including a first database; and a second device for implementing a pseudowire extended group, the second device including a second database. The first and second devices have been provisioned to enable communication between them via a pseudowire. The first database includes an identifier of the second device in association with the pseudowire and a second pseudowire group, and the second database includes an identifier of the first device in association with the pseudowire and a first pseudowire group.

### Brief Description of the Drawings

The foregoing and other objects, features and advantages of the invention will be apparent from the following more particular description of the preferred embodiments, as illustrated in the appended drawings, where:
**Figure 1** depicts a prior art PW emulation reference model.
**Figure 2** depicts a prior art reference model for MS-PW.
**Figure 3** depicts devices and messaging used to assign and convey PW extended groups for MS-PWs according to a first embodiment of the invention.
**Figure 4** depicts a PW extended group type length value (TLV) message according to a second embodiment of the invention.
**Figure 5** depicts a PW group element of the message in **Figure 4****.**
**Figure 6** is a flowchart depicting a method of learning a PW extended group according to a third embodiment of the invention.
**Figure 7** is a flowchart depicting a method of initiating a wildcard PW status message according to a fourth embodiment of the invention.
**Figure 8** is a flowchart depicting a method of responding to a wildcard PW status message according to a fifth embodiment of the invention.
**Figure 9** depicts a device for implementing a pseudowire extended group according to a sixth embodiment of the invention.
In the figures like features are denoted by like reference characters.

### Detailed Description

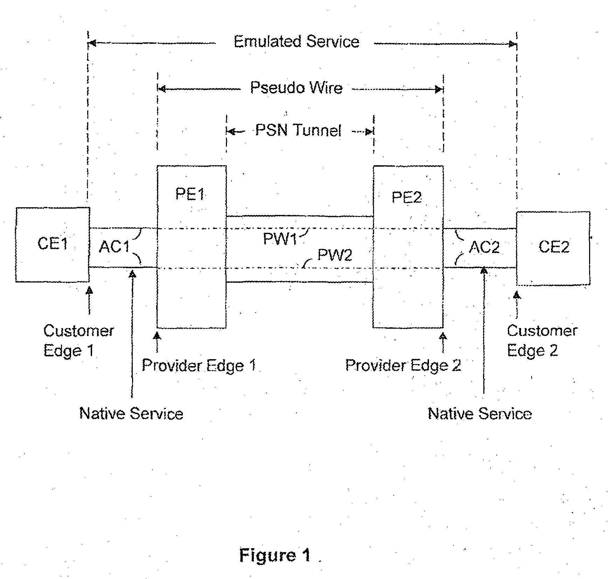

**Figure 1** depicts a prior art PW emulation reference model. As depicted, two PEs **(PE1, PE2)** provide two PWs **(PW1, PW2)** on behalf of their client CEs **(CE1** and **CE2)** to enable the client CEs to communicate over a PSN. A PSN tunnel is established to provide a data path for the PWs **(PW1, PW2)** between the two PEs **(PE1, PE2**). The PW traffic is indistinguishable from other traffic to the core network, and the core network is transparent to the CEs. Native service data units (e.g. bits, cells, or packets) arrive via the Attachment Circuits **(AC1, AC2),** are encapsulated in respective pseudowire PDUs (PW PDUs), and are carried across the underlying network via the PSN tunnel. The PEs perform encapsulation and decapsulation of PW PDUs and handle any other functions required by the PW service, such as sequencing or timing.

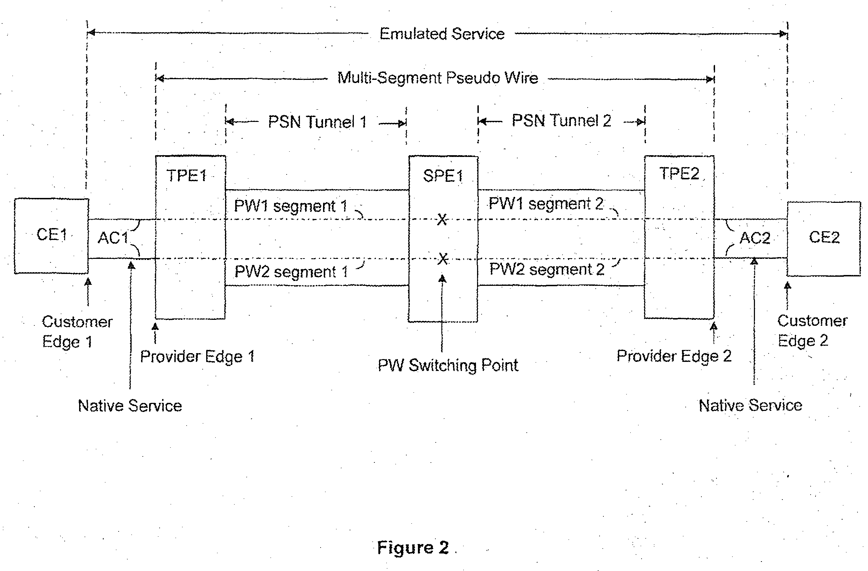

**Figure 2** depicts a prior art reference model for MS-PW. A Multi-Segment Pseudowire (MS-PW) is a set of two or more contiguous segments that behave and function as a single point-to-point PW. A MS-PW enables providers to extend the reach of PWs across multiple transport PSN domains.

Referring to **Figure 2****,** a switching point PE (S-PE) **(SPE1)** runs two separate control planes: one toward a first tunnel endpoint PE **(TPE1),** and one toward a second tunnel endpoint PE **(TPE2).** The PW switching point **(SPE1)** is configured to connect a first segment of a first pseudowire **(PW1 Segment 1)** carried over a first PSN tunnel **(PSN Tunnel 1)** and a second segment of the first pseudowire **(PW1 Segment 2)** carried over a second PSN tunnel **(PSN Tunnel 2)** together to complete the multi-segment PW between the first and second tunnel endpoint PEs **(TPE1, TPE2).** The first and second segments of the first pseudowire **(PW1 Segment 1, PW1 Segment 2)** must be of the same PW type, but the first and second PSN tunnels **(PSN Tunnel 1, PSN Tunnel 2)** need not be the same technology. In the latter case, if the PW is switched to a different technology, the PEs must adapt the PDU encapsulation between the different PSN technologies. In the case where the first PSN tunnel **(PSN Tunnel 1)** and the second PSN tunnel **(PSN Tunnel 2)** are the same technology, the PW PDU does not need to be modified, and PDUs are then switched between the first and second segments of their respective pseudowires at the PW label level.

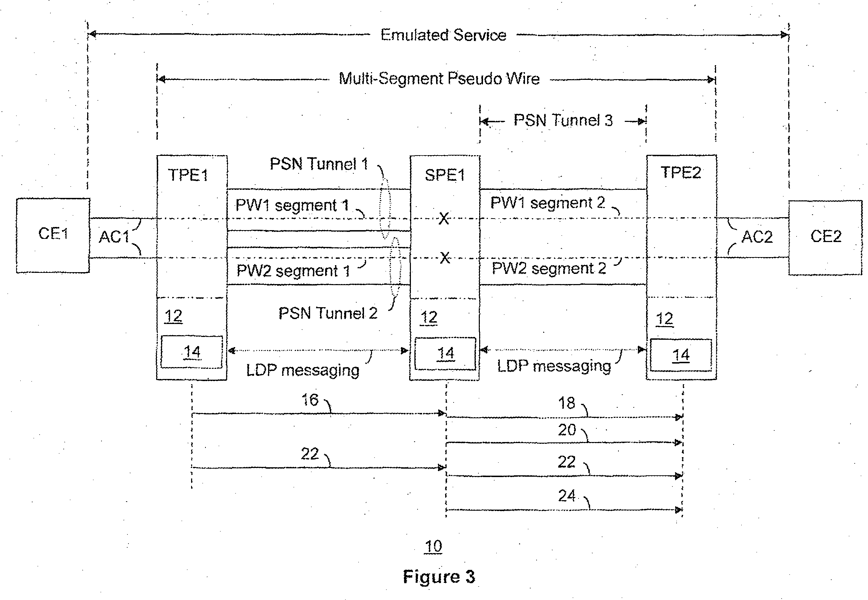

**Figure 3** depicts a system **10** capable of assigning a PW extended group for a MS-PW and conveying information about the extended group to all PEs in the path of the MS-PW according to a first embodiment of the invention. The system is similar to that of **Figure 2** with at least one distinguishing feature that the PEs **(TPE1, SPE1, TPE2)** have been adapted to implement a new concept of PW "extended" groups to enable seamless wildcard messaging across the span of the MS-PW. When a PW is set-up, PW extended group information is carried along with a set-up request message used to set-up the PW. The set-up request message is processed in a control plane **12** of the PEs. Each S-PE along the path of the MS-PW adds the extended group information assigned locally by the S-PE before forwarding the PW set-up request to next-hop PE device. The PW extended group contains multiple PW group elements to which the PW belongs. Each PW group element is described by a PE identifier and group Identifier (PE-ID, Group-ID) tuple. A PE may bind a PW to one or more groups unique to that PE, each such group being represented by a PW group element. Thus a PW group element has local significance to a PE, but the information is propagated to all other PEs along with the path over which the set-up request message of that specific PW travels.

Each PE maintains a mapping **14** of PW group elements that it has learned from it neighboring PE devices. A PE device learns the various PW groups assigned by another PE device from PW extended group information received in a PW set-up request message. Although a PW group is unique to a PE device, each PE device receiving such information maintains the mapping, e.g. as a record in a database on the PE, of PW group elements based on the neighboring PE device from which the PW group elements were learned. This is important since a wildcard message is typically received through a specific neighbor PE device.

A mapping record of a PW group element contains the list of its member PWs. The PW extended grouping allows any PE device to initiate a wildcard message based on one or more local PW group elements. A receiving PE device takes appropriate action on member PWs as per the PW group element mapping record with respect to the sender PE. If the receiving device is an S-PE for a set of PWs that belong to the specified group (or groups) then the wildcard message is seamlessly forwarded to all next-hop S-PE and/or T-PE of the member PWs.

An example is as follows based on the MS-PW shown in **Figure 3****.**
1. Both the first pseudowire (**PW1**) and the second pseudowire (**PW2**) share the same local port and thus are assigned a group (TPE1, G1) in the first tunnel endpoint PE **(TPE1).**
2. The first and second pseudowire **(PW1**, **PW2)** are both routed to the same next-hop, which is the switching point PE (**SPE1**), but are assigned different transport tunnels, those being the first PSN tunnel **(PSN Tunnel 1)** and the second PSN tunnel **(PSN Tunnel 2),** respectively. The first tunnel endpoint PE **(TPE1)** assigns group G2 to all PWs sharing the first PSN tunnel **(PSN Tunnel 1)** and G3 to all PWs sharing the second PSN tunnel **(PSN Tunnel 2).** Thus the first pseudowire **(PW1)** is assigned the groups (TPE1, G1) + (TPE1, G2) and the second pseudowire **(PW2)** is assigned the groups (TPE1, G1) + (TPE2, G3).
3. After the switching point PE **(SPE1)** receives a first PW set-up request message **16** for the first and second pseudowires **(PW1, PW2**), the switching point PE **(SPE1)** learns the following PW grouping information and stores it as a mapping **14** of PW group elements:
   Neighbor T-PE1:
      Port
         (TPE1, G1)----> PW1, PW2
      Tunnel
         (TPE1, G2)----> PW1
         (TPE1, G3)----> PW2
4. The switching point PE **(SPE1)** decides to route both the first and second pseudowires **(PW1, PW2**) to the same next-hop, which is the second tunnel endpoint PE **(TPE2)** over the same PSN tunnel, which is a third PSN tunnel **(PSN Tunnel 3).** The switching point PE (**SPE1**) assigns the group G1 to all PWs sharing the third PSN tunnel **(PSN Tunnel 3).** Thus a second set-up request message **18** for the first pseudowire (**PW1**) is forwarded to the second tunnel endpoint PE **(TPE2)** with the groups (TPE1, G1) + (TPE1, G2) + (SPE1, G1). A third set-up request message **20** for the second pseudowire **(PW2)** is forwarded to the second tunnel endpoint PE **(TPE2)** with the groups (TPE1, G1) + (TPE1, G3) + (SPE1, G1).
5. On receiving the second and third set-up request messages **18, 20** for the first and second pseudowires **(PW1, PW2)** respectively, the second tunnel endpoint PE **(TPE2)** forms the following and stores it as a mapping **14** of PW group elements:
   Neighbor T-PE1:
      Port
         (TPE1, G1)----> PW1, PW2
      Tunnel
         (TPE1, G2) ----> PW1
         (TPE1, G3 )----> PW2
         (SPE1, G1)----> PW1, PW2

Based on the PW set-up above some of the PW status/failure procedures would be as follows.

When local port status changes at the first tunnel endpoint PE **(TPE1),** the first tunnel endpoint PE (**TPE1**) initiates a wildcard PW status message **22** with group (TPE1, G1) and sends the message **22** to the switching point PE (**SPE1**). Upon receiving the message **22,** the switching point PE **(SPE1)** takes action on the first and second pseudowires **(PW1, PW2)** based on membership information available on the group (TPE1, G1). The switching point PE **(SPE1)** forwards the wildcard PW status message **22** to the next-hop (or next-hops) of the member PWs, which is the second tunnel endpoint PE **(TPE2).** Upon receiving the message **22,** the second tunnel endpoint PE **(TPE2)** takes action on the first and second pseudowires **(PW1, PW2)** based on the membership information it had learned about the group (TPE1, G1). Such actions taken by the switching point PE **(SPE1)** and the second tunnel endpoint PE **(TPE2)** may include raising an alarm, diverting traffic carried by the first and second pseudowires **(PW1, PW2)** to other pseudowires, and/or rerouting the first and second pseudowires **(PW1, PW2).**

When status of the third PSN tunnel (**PSN Tunnel 3)** changes at the switching point PE (**SPE1**), the switching point PE (**SPE1**) initiates a wildcard PW status message **24** with the group (SPE1, G1) and sends it to the next-hop (or next-hops) of all PWs that share that group, which is the second tunnel endpoint PE **(TPE2)** in this case. On receiving the wil dcard PW status message **24,** the second tunnel endpoint PE **(TPE2)** takes action on the first and second pseudowires **(PW1, PW2)** based on membership information available in its database **14.** Such action taken by the second tunnel endpoint PE **(TPE2)** may include raising an alarm, diverting traffic carried by the first and second pseudowires **(PW1, PW2)** to other pseudowires, and/or rerouting the first and second pseudowires **(PW1, PW2).**

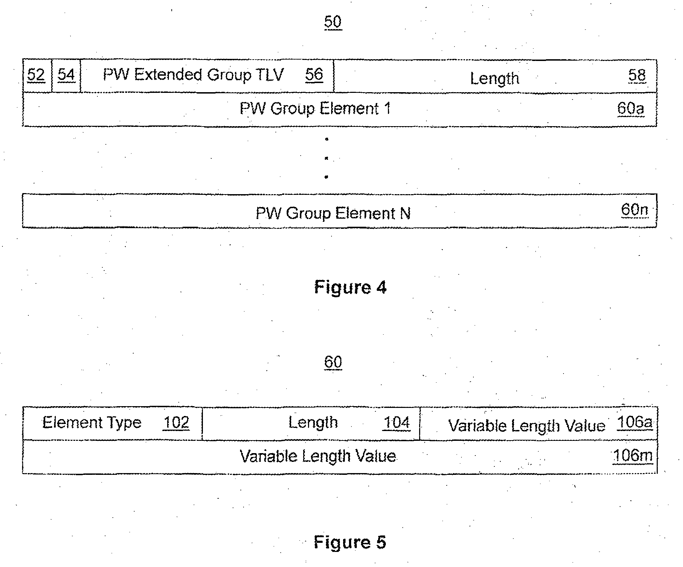

Figure **4** depicts a PW extended group type length value (TLV) message **50** according to a second embodiment of the invention. A PW extended group TLV **56** occupying bits 2 to 15 in the message **50** carries a list of PW group elements, each PW group element **60a, 60n** being a multiple of 32 bits in length. Bits 0 and 1 of the PW extended group TLV message **50** are set to 1 and 0, respectively. Bits 16 to 31 of the PW extended group TLV message **50** hold a length value **58** corresponding to the length of the message **50.** The definition of the PW extended group TLV message **50** is compliant with the requirements of IETF LDP specification RFC5036. The LDP specification RFC5036 allows Vendor Private TLV space which can be used to assign the TLV type space assigned to the Vendor. For inter-operability among vendors, the TLV type can also be standardized with the Internet Address and Naming Authority (IANA).

**Figure 5** depicts a PW group element **60** of the PW extended group message **50** in **Figure 4****.** A PW group element **60** includes an element type field **102** occupying bits 0 to 7, a length field **104** occupying bits 8 to 15 that specifies the length of the PW group element **60,** one or more variable length value fields **106a**, **106m** occupying the remaining bits of the PW group element **60.**

The following PW group element Types **102** are defined in this document:
Type 1 - Value field **106** contains the following:
   - 32 bit Group ID.
   - IP address identifying the PE device to which the Group ID belongs.
Type 2 - Value field **106** contains the following:
   - 32 bit Group ID.
   - Identifier of the PE device in S-PE addressing format as specified in Dynamic Multi-segment PW specification.

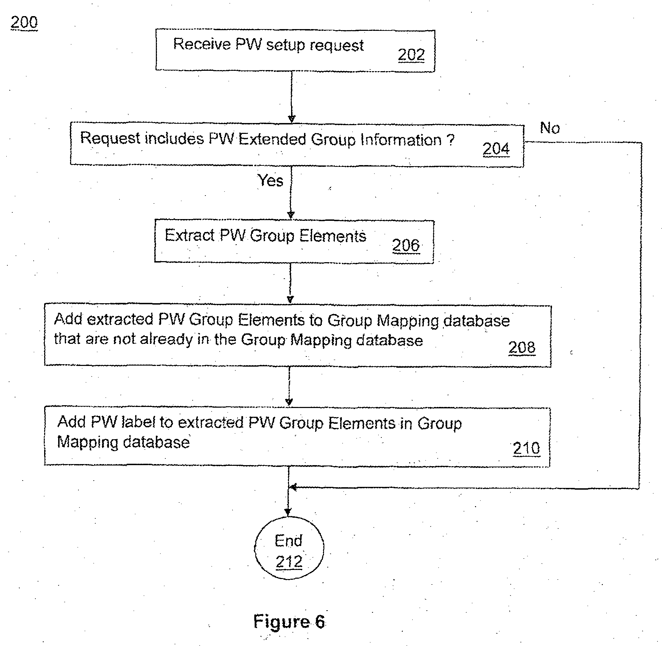

**Figure 6** is a flowchart depicting a method **200** of learning an PW extended group according to a third embodiment of the invention. The method **200** may be performed by a PE, which as already stated includes S-PE and TPE devices. The following description of the method **200** references features of the foregoing drawings as examples by the reference characters of the features. The method **200** begins by receiving **202,** at a PE **(TPE1, SPE1**, **TPE2),** a PW setup request message **(16, 18, 20)** that identifies a PW to be setup, e.g. by an MPLS PW label. The PE determines **204** whether or not the PW setup request message **(16, 18, and 20)** includes PW extended group informations such as a PW extended group TLV **56.** If such PW extended group information is not included in the PW setup request message the method **200** ends **212,** otherwise execution of the method **200** proceeds to a step of extracting **206,** from the PW setup request message **(16,18, 20)** one or more PW group elements **60.**

The extracted PW group elements **60** are added **208** to the group mapping database **14** of the PE if they are not already present in the group mapping database **14.** This adding **208** could be done in several ways, for example a check could be made first to see if a particular PW group element **60** is already in the group mapping database, e.g. by using the PW group element tuple (PE-ID, group-ID) as an index to search for records in the database already having that tuple, or an attempt to add the PW group element **60** could be made and the actual adding simply skipped if an error was returned indicating that the tuple already exist in the group mapping database **14.**

The method **200** then proceeds to adding **210** the PW label of the PW being setup to records in the group mapping database **14** that include the PW group elements extracted from the PW extended TLV **56.** The method **200** then ends **212.**

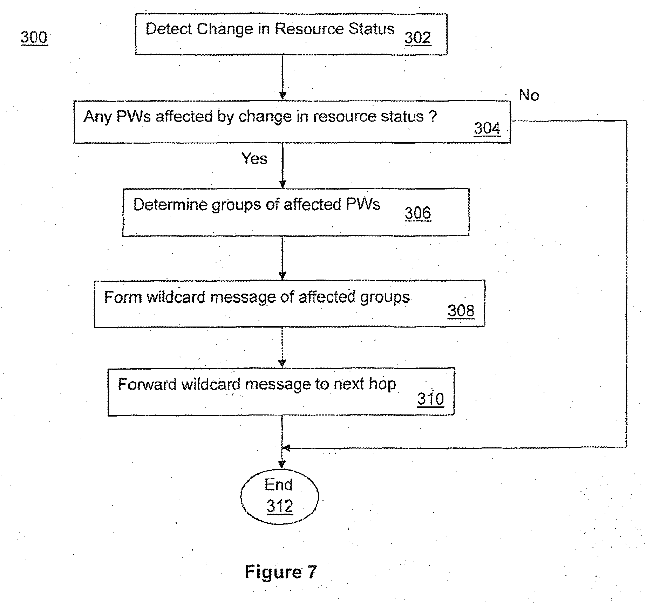

**Figure 7** is a flowchart depicting a method **300** of initiating a wildcard PW status message **22** according to a fourth embodiment of the invention. The method **300** may be performed by a PE, which as already stated includes S-PE and TPE devices. The following description of the method **300** references features of the foregoing drawings as examples by the reference characters of the features. The method **300** begins by detecting **302,** at a PE, a change in status of a resource associated with the PE. Such resource could be a port of the PE or a PSN tunnel (e.g. **PSN Tunnel 1)** over which the PE is conveying PW PDUs or otherwise using or monitoring the resource. The change in status may include a change from operational to non-operational status of the resource, a change from alarm-free to alarmed status of the resource, a change from error-free operational to non-error-free operational status of the resource, etc. After a change in status of the resource is detected **302,** execution of the method proceeds to a step of determining **304** which PW or PWs, if any, are affected by the change in status. This could be done for example by the PE checking its records of MPLS label provisioning (e.g. as would exist in typical PEs) for PWs that are associated with the resource in question. If no PWs are affected by the change in resource status the method **300** ends **312,** otherwise execution of the method **300** proceeds to a step of determining **306** groups of the affected PW or PWs.

Recall that during the method **200** of learning an PW extended group that a PW is associated with includes storing, in a record of the group mapping database **14,** the PW label and a PW group element **60.** Further recall that a PW group element **60** comprises a tuple that includes a PE-ID and a group-ID. The step of determining **306** groups of one or more affected PWs can be achieved by using the PW label of each affected PW as an index to lookup PW group elements in the PE's group mapping database **14** that correspond to that PW. Execution of the method **300** then proceeds to forming **308** a wildcard message **22** that includes an indication of the affected PW groups. This forming **308** comprises creating a PW extended group TLV **50** that includes the PW group elements **60** of the affected PW groups that were looked up in the PE's group mapping database **14.** Execution of the method **300** then proceeds to forwarding **310** that wildcard message **22** to next hop devices in the path of the affected PW or PWs. The method **300** then ends **312.**

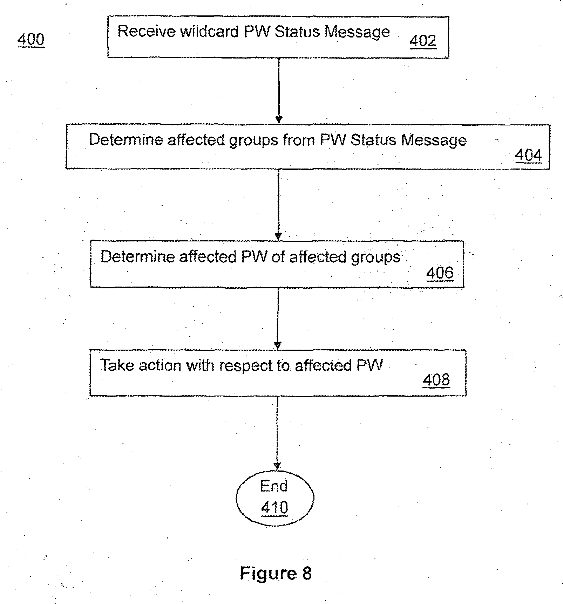

Figure **8** is a flowchart depicting a method **400** of responding to a wildcard PW status message **22** according to a fifth embodiment of the invention. The method **400** may be performed by a PE, which as already stated includes S-PE and TPE devices. The following description of the method **400** references features of the foregoing drawings as examples by the reference characters of the features. The method **400** begins by receiving **402** a wildcard PW status message **22** at a PE over a PW (e.g. **PW1).** The PE then determines **404** which PW groups are affected from the PW status message **22.** This is done by reading the group-ID from the one or more tuples included in the PW group elements **60** of the wildcard PW status message **22**. Execution of the method **400** then proceeds to determining **406** affected PW of the affected PW groups. The PE may perform this step for example by using the tuples of the one or more affected group-IDs as an index to read, from the PE's group mapping database **14,** the label of each PW associated with the affected PW groups. The method **400** then proceeds to the step of the PE taking **408** an action with respect to the affected PWs. Taking **408** an action may include initiating another wildcard PW status message **22** in accordance with the method **300** previously described, as well it may include raising an alarm, diverting traffic carried by the PW to another PW, and/or rerouting the PW. The method **400** then ends **410.**

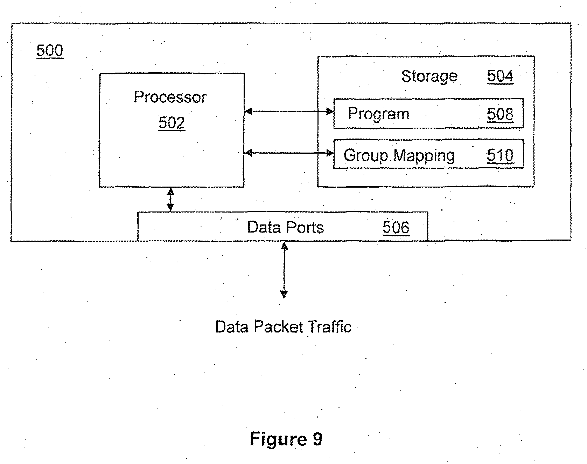

**Figure 9** depicts a device **500** for implementing an pseudowire extended group according to a sixth embodiment of the invention. The device may take the form of a PE as previously described. The device **500** includes a processor **502,** storage **504,** and one or more data ports **506.** The processor is in communication with the storage **504** and the data ports **506.** The data ports are used to receive and transmit PW PDU traffic of the type previously described, including PW setup request messages **(16, 18, 20)** and wildcard PW status messages **(22, 24).** The storage **504** includes memory that stores a program **508** that embodies one or more of the methods **200, 300, 400** previously described. That is, the storage **504** has been configured by the program **508,** so that the device **500** is operable to perform one or more of them methods **200, 300, 400.** For example, the program **508** would typically include executable instructions that when executed by the processor **500** cause the steps of one or more of the described methods **200, 300, 400** to be performed by the device **500.** For that purpose the storage **504** also includes memory **510** that has been adapted to store, and in operation typically stores, information contained in the group mapping database **14** previously described.

Advantageously, PW extended grouping procedures previously described can be applicable for the following scenarios: wildcard withdrawal of PW label mappings, PW status signaling including all OAM message mappings, PW applications as such MAC flush for VPLS, etc.

Numerous modifications, variations and adaptations may be made two the embodiments of the invention described above without departing from the scope of the invention, which is defined in the claims.

## Claims

1. A method of learning a pseudowire group, wherein a pseudowire is associated to one group at each provider edge device (TPE1, TPE2, SPE1) across which the pseudowire traverses, the method comprising
performing the following steps by a provider edge device:
receiving (202) the pseudowire setup request message (16, 18, 20) that includes a pseudowire label and the group information;
extracting (206) the group information and the pseudowire label from the pseudowire setup request message (16, 18, 20);
adding (208) the extracted group information to a database in the provider edge device;
adding (210) the pseudowire label to a record in the database that includes the extracted group information;
**characterized in**
**that** the pseudowire is associated to one or more groups at each provider edge device (TPE1, TPE2, SPE1) across which the pseudowire traverses,
**that** each provider edge device adds one or more local group membership information elements into a pseudowire setup request message (16, 18, 20) when the pseudowire setup request message (16, 18, 20) traverses across the provider edge devices (TPE1, TPE2, SPE1), said added local group membership information elements are group information
**that** the group information are extended group information, and
**that** the method comprises the step of
initiating a wildcard message and forwarding the wildcard message to notify other provider edge devices with respect to pseudowires in any of local groups of the provider edge device, and allowing a pseudowire to be bound to multiple groups based on various requirements.

2. The method of claim 1,
wherein extracting (206) the pseudowire label comprises reading a multiprotocol label switching pseudowire label from the pseudowire setup request message (16, 18, 20).

3. The method of claim 1,
wherein extracting (206) the extended group information comprises reading a pseudowire extended group type-length-value parameter from the pseudowire setup request message (16, 18, 20).

4. The method of claim 1,
wherein receiving (202) comprises:
determining (204) if the pseudowire setup request message (16, 18, 20) includes pseudowire extended group information; and
terminating (212) execution of the method responsive to the pseudowire setup request message not including pseudowire extended group information.

5. A provider edge device (500) for implementing a pseudowire group, wherein a pseudowire is associated to one group at each provider edge device across (TPE1, TPE2, SPE1) which the pseudowire traverses, the device (500) comprising:
a data port (506) operable to receive and transmit pseudowire protocol data unit traffic;
storage (504) having memory that has been adapted by a program (508) of instructions; and
a processor (502) in communication with the storage (504) and the data port (506),
wherein execution of the program (508) by the processor (502) causes the device (500) to perform a function associated with a pseudowire group, and
wherein the function comprises:
receiving (202) the pseudowire setup request message (16, 18, 20) that includes a pseudowire label and the group information;
extracting (206) the group information and the pseudowire label from the pseudowire setup request message (16, 18, 20);
adding (208) the extracted group information to a database in the provider edge device;
adding (210) the pseudowire label to a record in the database that includes the extracted group information;
**characterized in**
**that** the pseudowire is associated to one or more groups at each provider edge device (TPE1, TPE2, SPE1) across which the pseudowire traverses;
**that** each provider edge device adds one or more local group membership information elements into a pseudowire setup request message (16, 18, 20) when the pseudowire setup request message (16, 18, 20) traverses across the provider edge devices (TPE1, TPE2, SPE1), said added local group membership information elements are group information;
**that** the group information are extended group information; and
**that** the function comprises
initiating a wildcard message and forwarding the wildcard message to notify other provider edge devices with respect to pseudowires in any of local groups of the provider edge device, and allowing a pseudowire to be bound to multiple groups based on various requirements.

6. The device (500) of claim 5,
wherein the storage (504) is adapted to store during performance of the function a mapping of a pseudowire to a pseudowire extended group.

7. The device (500) of claim 6
wherein the device (500) is a provider edge device.

8. The device (500) of claim 6
wherein the device (500) is a label switched router.

9. The device (500) of claim 5,
wherein extracting the pseudowire label comprises reading a multiprotocol label switching pseudowire label from the pseudowire setup request message (16, 18, 20).

10. The device (500) of claim 5,
wherein extracting the extended group information comprises reading a pseudowire extended group type-length-value parameter from the pseudowire setup request message (16, 18, 20).

11. The device (500) of claim 5,
wherein receiving comprises:
determining if the pseudowire setup request message (16, 18, 20) includes pseudowire extended group information; and
terminating execution of the function responsive to the pseudowire setup request message (16, 18, 20) not including pseudowire extended group information.

12. A packet switched network comprising:
a first device (500) for implementing an pseudowire extended group according to claim 5, the first device (500) including a first database; and
a second device for implementing a pseudowire extended group according to claim 5, the second device including a second database,
wherein the first (500) and second devices have been provisioned to enable communication between them via a pseudowire, and
wherein the first database includes an identifier of the second device in association with the pseudowire and a second pseudowire group, and the second database includes an identifier of the first device (500) in association with the pseudowire and a first pseudowire group.

## Patentansprüche

1. Verfahren zum Lernen einer Pseudowire-Gruppe, wobei ein Pseudowire einer Gruppe an jedem Provider-Edge-Gerät (TPE1, TPE2, SPE1) zugeordnet wird, über das der Pseudowire verläuft, wobei das Verfahren das Ausführen der folgenden Schritte durch ein Provider-Edge-Gerät umfasst:
Empfangen (202) der Pseudowire-Einrichtungsanfragenachricht (16, 18, 20), die ein Pseudowire-Label und die Gruppeninformation umfasst:
Extrahieren (206) der Gruppeninformation und des Pseudowire-Labels aus der Pseudowire-Einrichtungsanfragenachricht (16, 18, 20);
Hinzufügen (208) der extrahierten Gruppeninformation zu einer Datenbank im Provider-Edge-Gerät;
Hinzufügen (210) des Pseudowire-Labels zu einem Eintrag in der Datenbank, der die extrahierte Gruppeninformation umfasst;
**dadurch gekennzeichnet,**
**dass** der Pseudowire einer oder mehreren Gruppen an jedem Provider-Edge-Gerät (TPE1 TPE2, SPE1) zugeordnet wird, über das der Pseudowire verläuft,
**dass** jedes Provider-Edge-Gerät ein oder mehrere lokale Gruppenangehörigkeits-Informationselemente in eine Pseudowire-Einrichtungsanfragenachricht (16, 18, 20) hinzufügt, wenn die Pseudowire-Einrichtungsanfragenachricht (16, 18, 20) über die Provider-Edge-Geräte (TPE1, TPE2, SPE1) verläuft, wobei besagte hinzugefügte lokale Gruppenangehörigkeits-Informationselemente Gruppeninformationen sind,
**dass** die Gruppeninformationen erweiterte Gruppeninformationen sind, und
**dass** das Verfahren den Schritt umfasst des
Veranlassens einer Wildcard-Nachricht und des Weiterleitens der Wildcard-Nachricht, um andere Provider-Edge-Geräte in Bezug auf Pseudowires in einer beliebigen von lokalen Gruppen des Provider-Edge-Geräts zu benachrichtigen, und des Zulassens, dass ein Pseudowire an mehrere Gruppen basierend auf unterschiedlichen Anforderungen gebunden wird.

2. Verfahren nach Anspruch 1,
wobei das Extrahieren (206) des Pseudowire-Labels das Lesen eines Multiprotokoll-Label-Switching-Pseudowire-Labels aus der Pseudowire-Einrichtungsanfragenachricht (16, 18, 20) umfasst.

3. Verfahren nach Anspruch 1,
wobei das Extrahieren (206) der erweiterten Gruppeninformation das Lesen eines erweiterten Gruppentyp-Längen-Wertparameters eines Pseudowires aus der Pseudowire-Einrichtungsanfragenachricht (16, 18, 20) umfasst.

4. Verfahren nach Anspruch 1,
wobei das Empfangen (202) Folgendes umfasst:
Bestimmen (204), ob die Pseudowire-Einrichtungsanfragenachricht (16, 18, 20) eine erweiterte Gruppeninformation eines Pseudowires umfasst; und
Abschließen (212) der Ausführung des Verfahrens in Reaktion auf die Pseudowire-Einrichtungsanfragenachricht, wenn diese keine erweiterte Gruppeninformation eines Pseudowires umfasst.

5. Provider-Edge-Gerät (500) zum Implementieren einer Pseudowire-Gruppe, wobei ein Pseudowire einer Gruppe an jedem Provider-Edge-Gerät (TPE1, TPE2, SPE1) zugeordnet wird, über das der Pseudowire verläuft, wobei das Gerät (500) Folgendes umfasst:
einen Datenanschluss (506), der betriebsfähig ist, um einen Protokolldateneinheitsverkehr eines Pseudowires zu empfangen und zu senden;
eine Ablage (504) mit einem Speicher, der durch ein Programm (508) von Befehlen angepasst wurde; und
einen Prozessor (502) in Kommunikation mit der Ablage (504) und dem Datenanschluss (506),
wobei das Ausführen des Programms (508) durch den Prozessor (502) das Gerät (500) veranlasst, eine Funktion durchzuführen, die einer Pseudowire-Gruppe zugeordnet ist, und
wobei die Funktion Folgendes umfasst:
Empfangen (202) der Pseudowire-Einrichtungsanfragenachricht (16, 18, 20), die ein Pseudowire-Label und die Gruppeninformation umfasst;
Extrahieren (206) der Gruppeninformation und des Pseudowire-Labels aus der Pseudowire-Einrichtungsanfragenachricht (16, 18, 20);
Hinzufügen (208) der extrahierten Gruppeninformation zu einer Datenbank im Provider-Edge-Gerät;
Hinzufügen (210) des Pseudowire-Labels zu einem Eintrag in der Datenbank, der die extrahierte Gruppeninformation umfasst;
**dadurch gekennzeichnet,**
**dass** der Pseudowire einer oder mehreren Gruppen an jedem Provider-Edge-Gerät (TPE1, TPE2, SPE1) zugeordnet wird, über das der Pseudowire verläuft,
**dass** jedes Provider-Edge-Gerät ein oder mehrere lokale Gruppenangehörigkeits-Informationselemente in eine Pseudowire-Einrichtungsanfragenachricht (16, 18, 20) hinzufügt, wenn die Pseudowire-Einrichtungsanfragenachricht (16, 18, 20) über die Provider-Edge-Geräte (TPE1, TPE2, SPE1) verläuft, wobei besagte hinzugefügte lokale Gruppenangehörigkeits-Informationselemente Gruppeninformationen sind,
**dass** die Gruppeninformationen erweiterte Gruppeninformationen sind, und
**dass** die Funktion das
Veranlassen einer Wildcard-Nachricht und das Weiterleiten der Wildcard-Nachricht, um andere Provider-Edge-Geräte in Bezug auf Pseudowires in einer beliebigen von lokalen Gruppen des Provider-Edge-Geräts zu benachrichtigen, und das Zulassen umfasst, dass ein Pseudowire an mehrere Gruppen basierend auf unterschiedlichen Anforderungen gebunden wird.

6. Gerät (500) nach Anspruch 5,
wobei die Ablage (504) angepasst ist, um beim Durchführen der Funktion eine Zuordnung eines Pseudowires zu einer erweiterten Gruppe eines Pseudowires zu speichern.

7. Gerät (500) nach Anspruch 6,
wobei das Gerät (500) ein Provider-Edge-Gerät ist.

8. Gerät (500) nach Anspruch 6,
wobei das Gerät (500) ein Label-geschalteter Router ist.

9. Gerät (500) nach Anspruch 5,
wobei das Extrahieren des Pseudowire-Labels das Lesen eines Multiprotolcoll-Label-Switching-Pseudowire-Labels aus der Pseudowire-Einrichtungsanfragenachricht (16, 18, 20) umfasst.

10. Gerät (500) nach Anspruch 5,
wobei das Extrahieren der erweiterten Gruppeninformation das Lesen eines erweiterten Gruppentyp-Längen-Wertparameters eines Pseudowires aus der Pseudowire-Einrichtungsanfragenachricht (16, 18, 20) umfasst.

11. Gerät (500) nach Anspruch 5,
wobei das Empfangen Folgendes umfasst:
Bestimmen, ob die Pseudowire-Einrichtungsanfragenachricht (16, 18, 20) eine erweiterte Gruppeninformation eines Pseudowires umfasst; und
Abschließen der Ausführung der Funktion in Reaktion auf die Pseudowire-Einrichtungsanfragenachricht (16, 18, 20), wenn diese keine erweiterte Gruppeninformation eines Pseudowires umfasst.

12. Paket-geschaltetes Netzwerk, umfassend:
ein erstes Gerät (500) zum Implementieren einer erweiterten Gruppe eines Pseudowires nach Anspruch 5, wobei das erste Gerät (500) eine erste Datenbank umfasst; und
ein zweites Gerät zum Implementieren einer erweiterten Gruppe eines Pseudowires nach Anspruch 5, wobei das zweite Gerät eine zweite Datenbank umfasst,
wobei das erste (500) und zweite Gerät bereitgestellt wurden, um zwischen ihnen eine Kommunikation über einen Pseudowire zu ermöglichen, und
wobei die erste Datenbank einen Identifikator des zweiten Geräts in Verbindung mit dem Pseudowire und einer zweiten Pseudowire-Gruppe umfasst, und die zweite Datenbank einen Identifikator des ersten Geräts (500) in Verbindung mit dem Pseudowire und einer ersten Pseudowire-Gruppe umfasst.

## Revendications

1. Procédé d'apprentissage d'un groupe de pseudo-circuits, dans lequel un pseudo-circuit est associé à un groupe au niveau de chaque dispositif périphérique de fournisseur (TPE1, TPE2, SPE1) que traverse le pseudo-circuit, le procédé comprenant les étapes suivantes :
exécution des étapes suivantes par un dispositif périphérique de fournisseur :
recevoir (202) le message de demande d'établissement de pseudo-circuit (16, 18, 20) qui contient une étiquette de pseudo-circuit et les informations de groupe ;
extraire (206) les informations de groupe et l'étiquette de pseudo-circuit du message de demande d'établissement de pseudo-circuit (16, 18, 20) ;
ajouter (208) les informations de groupe extraites à une base de données dans le dispositif périphérique de fournisseur ;
ajouter (210) l'étiquette de pseudo-circuit à un enregistrement dans la base de données qui contient les informations de groupe extraites ;
**caractérisé en ce que**
le pseudo-circuit est associé à un ou plusieurs groupes au niveau de chaque dispositif périphérique de fournisseur (TPE1, TPE2, SPE1) que traverse le pseudo-circuit,
chaque dispositif périphérique de fournisseur ajoute un ou plusieurs éléments d'information d'appartenance à un groupe local dans un message de demande d'établissement de pseudo-circuit (16, 18, 20) lorsque le message de demande d'établissement de pseudo-circuit (16, 18, 20) traverse les dispositifs périphériques de fournisseur (TPE1, TPE2, SPE1), lesdits éléments d'information d'appartenance à un groupe local étant des informations de groupe,
les informations de groupe sont des informations de groupe étendu, et
le procédé comprend l'étape de
initier un message à caractère générique et transférer le message à caractère générique pour notifier les autres dispositifs périphériques de fournisseur par rapport aux pseudo-circuits dans de quelconques des groupes locaux du dispositif périphérique de fournisseur, et autoriser un pseudo-circuit à être connecté à de multiples groupes en se basant sur diverses exigences.

2. Procédé selon la revendication 1,
dans lequel l'extraction (206) de l'étiquette de pseudo-circuit comprend la lecture d'une étiquette de pseudo-circuit de commutation d'étiquette multiprotocole auprès du message de demande d'établissement de pseudo-circuit (16, 18, 20).

3. Procédé selon la revendication 1,
dans lequel l'extraction (206) des informations de groupe étendu comprend la lecture d'un paramètre de valeur de longueur de type de groupe étendu de pseudo-circuit auprès du message de demande d'établissement de pseudo-circuit (16, 18, 20).

4. Procédé selon la revendication 1,
dans lequel l'étape de réception (202) comprend :
déterminer (204) si le message de demande d'établissement de pseudo-circuit (16, 18, 20) contient les informations de groupe étendu de pseudo-circuit ; et
mettre fin (212) à l'exécution du procédé en réaction au fait que le message de demande d'établissement de pseudo-circuit ne contient pas les informations de groupe étendu de pseudo-circuit.

5. Dispositif périphérique de fournisseur (500) destiné à mettre en oeuvre un groupe de pseudo-circuits, dans lequel un pseudo-circuit est associé à un groupe au niveau de chaque dispositif périphérique de fournisseur (TPE1, TPE2, SPE1) que traverse le pseudo-circuit, le dispositif (500) comprenant :
un port de données (506) qui peut être utilisé pour recevoir et émettre le trafic d'unités de données de protocole du pseudo-circuit ;
un dispositif de stockage (504) qui possède une mémoire qui a été adaptée par un programme (508) d'instructions ; et
un processeur (502) en communication avec le dispositif de stockage (504) et le port de données (506),
dans lequel l'exécution du programme (508) par le processeur (502) amène le dispositif (500) à accomplir une fonction associée à un groupe de pseudo-circuits, et
dans lequel la fonction comprend :
recevoir (202) le message de demande d'établissement de pseudo-circuit (16, 18, 20) qui contient une étiquette de pseudo-circuit et les informations de groupe ;
extraire (206) les informations de groupe et l'étiquette de pseudo-circuit du message de demande d'établissement de pseudo-circuit (16, 18, 20) ;
ajouter (208) les informations de groupe extraites à une base de données dans le dispositif périphérique de fournisseur ;
ajouter (210) l'étiquette de pseudo-circuit à un enregistrement dans la base de données qui contient les informations de groupe extraites ;
**caractérisé en ce que**
le pseudo-circuit est associé à un ou plusieurs groupes au niveau de chaque dispositif périphérique de fournisseur (TPE1, TPE2, SPE1) que traverse le pseudo-cïrcuït ;
chaque dispositif périphérique de fournisseur ajoute un ou plusieurs éléments d'information d'appartenance à un groupe local dans un message de demande d'établissement de pseudo-circuit (16, 18, 20) lorsque le message de demande d'établissement de pseudo-circuit (16, 18, 20) traverse les dispositifs périphériques de fournisseur (TPE1, TPE2, SPE1), lesdits éléments d'information d'appartenance à un groupe local étant des informations de groupe ;
les informations de groupe sont des informations de groupe étendu ; et
la fonction comprend
initier un message à caractère générique et transférer le message à caractère générique pour notifier les autres dispositifs périphériques de fournisseur par rapport aux pseudo-circuits dans de quelconques des groupes locaux du dispositif périphérique de fournisseur, et autoriser un pseudo-circuit à être connecté à de multiples groupes en se basant sur diverses exigences.

6. Dispositif (500) selon la revendication 5,
dans lequel le dispositif de stockage (504) est adapté pour stocker, pendant l'accomplissement de la fonction, une mise en correspondance entre un pseudo-circuit et un groupe étendu de pseudo-circuits.

7. Dispositif (500) selon la revendication 6,
dans lequel le dispositif (500) est un dispositif périphérique de fournisseur.

8. Dispositif (500) selon la revendication 6,
dans lequel le dispositif (500) est un routeur commuté par étiquettes.

9. Dispositif (500) selon la revendication 5,
dans lequel l'extraction de l'étiquette de pseudo-circuit comprend la lecture d'une étiquette de pseudo-circuit de commutation d'étiquette multiprotocole auprès du message de demande d'établissement de pseudo-circuit (16, 18, 20).

10. Dispositif (500) selon la revendication 5,
dans lequel l'extraction des informations de groupe étendu comprend la lecture d'un paramètre de valeur de longueur de type de groupe étendu de pseudo-circuit auprès du message de demande d'établissement de pseudo-circuit (16, 18, 20).

11. Dispositif (500) selon la revendication 5,
dans lequel la réception comprend :
déterminer si le message de demande d'établissement de pseudo-circuit (16, 18, 20) contient les informations de groupe étendu de pseudo-circuit ; et
mettre fin à l'exécution de la fonction en réaction au fait que le message de demande d'établissement de pseudo-circuit (16, 18, 20) ne contient pas les informations de groupe étendu de pseudo-circuit.

12. Réseau à commutation par paquets comprenant :
un premier dispositif (500) destiné à mettre en oeuvre un groupe étendu de pseudo-circuit selon la revendication 5, le premier dispositif (500) comprenant une première base de données ; et
un deuxième dispositif destiné à mettre en oeuvre un groupe étendu de pseudo-circuit selon la revendication 5, le deuxième dispositif comprenant une deuxième base de données,
dans lequel les premier (500) et deuxième dispositifs ont été conçus pour permettre la communication entre eux par le biais d'un pseudo-circuit, et
dans lequel la première base de données contient un identificateur du deuxième dispositif en association avec le pseudo-circuit et un deuxième groupe de pseudo-circuits, et la deuxième base de données contient un identificateur du premier dispositif (500) en association avec le pseudo-circuit et un premier groupe de pseudo-circuits.
